# EUROPÄISCHE PATENTSCHRIFT

(11) **EP 3 676 150 B1**
(45) Veröffentlichungstag und Bekanntmachung des Hinweises auf die Patenterteilung: **01.06.2022**
(21) Anmeldenummer: 18793573.9
(22) Anmeldetag: 10.10.2018
(51) Int. Cl.: B61D 33/00

(54) **SITZEINHEIT UND MOBILE EINHEIT**
SEAT UNIT AND MOBILE UNIT
UNITÉ SIÈGE ET UNITÉ MOBILE

(30) Priorität: 02.11.2017 DE 102017219485
(43) Veröffentlichungstag der Anmeldung: 08.07.2020
(73) Patentinhaber: Siemens Mobility GmbH, 81739 München (DE)
(72) Erfinder: BRAUERS, Stefan, 47652 Weeze (DE); CLAASSEN, Christian, 44139 Dortmund (DE); ESCH, Christoph, 40225 Düsseldorf (DE); NI, Viktor, 47804 Krefeld (DE); PECK, Stephanie, 52076 Aachen (DE); PFAFF, Peter, 38159 Vechelde (DE); SCHANZ, Stephan, 85716 Unterschleißheim (DE); SCHMIDT, Gerhard, 45127 Essen (DE); SCHMÄCKE, Michael, 52222 Stolberg (DE)
(86) Internationale Anmeldenummer: PCT/EP2018/077544
(87) Internationale Veröffentlichungsnummer: WO 2019/086217

(56) Entgegenhaltungen:
- WO-A1-2013/164151
- DE-U1-202014 103 167
- US-A1- 2007 069 558

## Beschreibung

Die Erfindung bezieht sich auf eine Sitzeinheit mit zumindest einem Tragarm, wobei der Sitz unter Verwendung von Tragelementen an dem Tragarm befestigt ist, wobei jedes der Tragelemente jeweils zumindest ein Sitzbefestigungselement umfasst, mittels welchem das jeweilige Tragelement fest mit dem Sitz verbunden ist, und wobei die Tragelemente derart angeordnet sind, dass die Sitzbefestigungselemente außerhalb des Tragarms angeordnet sind. Außerdem bezieht sich die Erfindung auf eine mobile Einheit mit einer solchen Sitzeinheit.

Eine Sitzeinheit der vorstehenden Art ist beispielsweise aus der DE 20 2014 103167 U1 bekannt. Die dort eingesetzten Tragelemente weisen eine allgemeine Dreiecksform auf und umgreifen einen vorgesehenen Tragarm.

Üblicherweise wird für jeden Sitz-Typ ein an den Sitz-Typ angepasster Tragarm entwickelt.

Üblicherweise umfasst der Tragarm Gewindebohrungen zur Befestigung des Sitzes. Je nach Sitztyp müssen die Gewindebohrungen an unterschiedlichen Positionen in den Tragarm eingebracht werden/sein. Derzeit ist es üblich, je nach zu verwendendem Sitztyp verschiedene Abmaße des Tragarms zu wählen. Es müssen also für verschiedene Sitztypen verschiedene Targarmtypen vorgehalten werden, was sowohl Entwicklungskosten als auch Lagerkosten erhöht.

Um die Flexibilität zu erhöhen, ist in der WO 2013/164151 A1 ein Tragarm vorgesehen, wobei innerhalb des Tragarms Sitzbefestigungselemente mit Gewindebohrungen positioniert werden. Dennoch können an diesem Sitzträger keine Sitze angebracht werden, deren Anbindepunkte zu weit auseinander liegen.

Eine Aufgabe der Erfindung ist es, eine Sitzeinheit bereitzustellen, die einfach aufgebaut ist, wobei der Sitz flexibel ausgewählt und flexibel angeordnet werden kann.

Die Aufgabe wird dadurch gelöst, dass der Tragarm mehrere schlitzförmige Aussparungen aufweist und
jedes der Tragelemente jeweils teilweise in zumindest einer der Aussparungen eingesetzt ist und
jedes der Tragelemente jeweils eine einsteckbare Rippe aufweist, welche jeweils zumindest in eine der Aussparungen des Tragarms eingesteckt ist.

Das heißt, dass vorzugsweise der Sitz, insbesondere über die Sitzbefestigungselemente, fest mit den Tragelementen verbunden ist. Zweckmäßigerweise sind die Tragelemente wiederum fest mit dem Tragarm verbunden. Zumindest eine der Verbindungen kann eine lösbare Verbindung sein. Weiter kann zumindest eine der Verbindungen eine nicht-lösbare Verbindung sein.

Vorzugsweise sind die Tragelemente, insbesondere über die Sitzbefestigungselemente, an dem Sitz befestigt. Weiter sind die Tragelemente vorzugsweise an dem Tragarm befestigt.

Auf diese Weise kann auf eine direkte, unmittelbare Befestigung des Sitzes an dem Tragarm verzichtet werden.

Zweckmäßigerweise umfasst die Sitzeinheit die Tragelemente.

Die Position der Tragelemente kann - insbesondere je nach gewähltem Sitz - frei gewählt werden. Das heißt, dass die Tragelemente vorzugsweise frei positionierbar sind. Insbesondere können die Sitzbefestigungselemente frei positionierbar sein. Aufgrund der Verwendung der Tragelemente kann der Sitz relativ zu dem Tragarm in allen drei Raumrichtungen frei positioniert werden. Auf diese Weise ist vorzugsweise die Position des Sitzes nicht durch ein Abmaß des Tragarms festgelegt und/oder begrenzt.

Insbesondere kann auf diese Weise der Sitz flexibel ausgewählt werden. Weiter kann auf diese Weise der Sitz flexibel angeordnet werden.

Unter Verwendung der Tragelemente kann ein einziger Tragarmtyp für verschiedenste Sitztypen genutzt werden. Auf diese Weise können Kosten, wie z.B. Entwicklungskosten, Lagerkosten usw., reduziert werden.

Die erfindungsgemäße Sitzeinheit kann weitere Vorteile aufweisen: Zweckmäßigerweise ist die Sitzeinheit einfach aufgebaut. Vorzugsweise ist die Sitzeinheit außerdem einfach zu montieren. Weiter ist es vorteilhaft, wenn die Sitzeinheit wartungsarm ist. Außerdem kann die Sitzeinheit ein besonders geringes Gewicht aufweisen. Ferner kann die Sitzeinheit kostengünstig sein. Beispielsweise können Herstellungskosten, Wartungskosten und/oder Transportkosten gering sein.

Die Sitzeinheit kann eine Sitzeinheit für eine stationäre Einheit, beispielsweise für ein Gebäude, sein.

Es ist bevorzugt, wenn die Sitzeinheit eine Sitzeinheit für eine mobile Einheit, insbesondere für ein Fahrzeug, ist. Beispielsweise kann der Sitz ein Fahrgastsitz für ein Fahrzeug sein, beispielsweise für einen Bus, für ein Wohnmobil, für ein Schienenfahrzeug, für ein Flugzeug, für ein Schiff o. Ä..

Weiter kann die Sitzeinheit eine Sitzeinheit für einen Teil eines Fahrzeugs sein, beispielsweise für einen Wagon eines Schienenfahrzeugs.

Der Sitz kann beispielsweise als Einzelsitz für eine einzelne Person ausgeführt sein. Weiter kann der Sitz z. B. als Sitzbank für mehrere Personen ausgeführt sein.

Zweckmäßigerweise umfasst der Sitz zumindest ein Sitzflächenelement. Weiter kann der Sitz eine Rückenlehne und/oder mindestens eine Armlehne aufweisen.

Vorzugsweise ist der Tragarm langgestreckt. Zweckmäßigerweise ist der Sitz unter Verwendung von den Tragelementen auf dem Tragarm befestigt.

Es ist vorteilhaft, wenn der Sitz unter Verwendung der Tragelemente relativ zu dem Tragarm unbeweglich ist. Das heißt, dass der Sitz unter Verwendung der Tragelemente nicht relativ zu dem Tragarm bewegt werden kann. Vorzugsweise lassen die Tragelemente eine Bewegung des Sitzes relativ zu dem Tragarm nicht zu.

Es ist jedoch möglich, dass unabhängig von den Tragelementen, beispielsweise innerhalb des Sitzes, ein Mechanismus zum Bewegen zumindest eines Teils des Sitzes relativ zu dem Tragarm vorgesehen ist.

Vorzugsweise ist jedes der Sitzbefestigungselemente fest mit dem Sitz verbunden. Es ist vorteilhaft, wenn jedes der Sitzbefestigungselemente lösbar mit dem Sitz verbunden ist. Beispielsweise kann jedes der Sitzbefestigungselemente jeweils unter Verwendung einer Klemmverbindung mit dem Sitz verbunden sein.

Es ist vorteilhaft, wenn jedes der Sitzbefestigungselemente jeweils unter Verwendung einer Schraubverbindung mit dem Sitz verbunden ist. Beispielsweise kann jedes der Sitzbefestigungselemente jeweils eine Gewindebohrung umfassen.

Vorzugsweise ist jedes der Tragelemente fest mit dem Tragarm verbunden. Jedes der Tragelemente kann lösbar mit dem Tragarm verbunden sein. Es ist vorteilhaft, wenn jedes der Tragelemente nicht-lösbar mit dem Tragarm verbunden ist.

Vorteilhafterweise ist jedes der Tragelemente jeweils unter Verwendung einer Schweißverbindung mit dem Tragarm verbunden. Gemäß der Erfindung weist der Tragarm mehrere Aussparungen auf. Jedes der Tragelemente ist jeweils teilweise in zumindest einer der Aussparungen eingesetzt. Zweckmäßigerweise sind die Tragelemente derart eingesetzt, dass die Sitzbefestigungselemente außerhalb des Tragarms angeordnet sind. Das heißt, es ist bevorzugt, wenn die Sitzbefestigungselemente nicht in die Aussparungen eingesetzt sind.

Die Aussparungen können beispielsweise unter Verwendung von Laserschneiden in den Tragarm eingebracht worden sein.

Zweckmäßigerweise ist die Form der jeweiligen Aussparung an die Form des jeweiligen Tragelements angepasst. Weiter kann die Form des jeweiligen Tragelements an die Form der jeweiligen Aussparung angepasst sein.

Die Aussparungen sind jeweils schlitzförmig ausgebildet.

Gemäß der Erfindung weist jedes der Tragelemente jeweils eine einsteckbare Rippe auf. Zweckmäßigerweise ist die jeweilige einsteckbare Rippe jeweils zumindest teilweise in den Tragarm eingesteckt. Die jeweilige einsteckbare Rippe ist zumindest teilweise in eine jeweilige Aussparung des Tragarms eingesteckt und/oder eingesetzt.

Vorzugsweise ist die Rippe zumindest im Wesentlichen plattenförmig.

Zweckmäßigerweise ist jeweils eine der Rippen fest mit zumindest einem der Sitzbefestigungselemente verbunden. Insbesondere kann jeweils eine der Rippen nicht-lösbar mit zumindest einem der Sitzbefestigungselemente verbunden sein, z. B. jeweils unter Verwendung einer Schweißverbindung.

Ferner kann das Tragelement einteilig ausgeführt sein.

Es ist bevorzugt, wenn jedes der Tragelemente in seiner Längsrichtung zwei gegenüberliegende Enden aufweist. Weiter ist es vorteilhaft, wenn jedes der Tragelemente jeweils zwei Sitzbefestigungselemente umfasst. Zweckmäßigerweise sind die jeweiligen zwei Sitzbefestigungselemente jeweils an den gegenüberliegenden Enden des jeweiligen Tragelements angeordnet.

Die Längsrichtung des jeweiligen Tragelements kann jeweils im Wesentlichen parallel zu einer Querrichtung des Tragarms verlaufen. Vorzugsweise verläuft die Längsrichtung des jeweiligen Tragelements zumindest im Wesentlichen horizontal. Als Querrichtung des Targarms kann diejenige Richtung des Tragarms aufgefasst werden, welche senkrecht zu einer Längsrichtung des Tragarms verläuft. Das heißt, dass die Längsrichtung des jeweiligen Tragelements jeweils im Wesentlichen senkrecht zu der Längsrichtung des Tragarms verlaufen kann.

Als Längsrichtung eines Elements kann die Richtung der längsten Ausdehnung dieses Elements aufgefasst werden. Zweckmäßigerweise verläuft die Querrichtung eines Elements senkrecht zu der Längsrichtung dieses Elements. Weiter ist es vorteilhaft, wenn die Querrichtung zumindest im Wesentlichen horizontal verläuft.

Falls jedes der Tragelemente die zuvor genannte Rippe umfasst, kann beispielsweise eine flächige Seite der Rippe zumindest im Wesentlichen senkrecht zur Längsrichtung des Tragarms stehen.

Ferner kann jedes der Tragelemente jeweils eine Verbindungsfläche aufweisen. Vorzugsweise ist die jeweilige Form der jeweiligen Verbindungsfläche an die Form einer Oberfläche des Tragarms angepasst. Jede der Verbindungsflächen kann mit der Oberfläche des Tragarms fest verbunden sein.

Der Sitz kann unter Verwendung der Tragelemente von dem Tragarm beabstandet sein.

Weiter kann der Sitz eine Oberfläche des Tragarms teilweise berühren.

Vorzugsweise ist der Tragarm ein auf eine vorgegebene Länge gebrachtes Endlosprofil. Beispielsweise kann der Tragarm ein auf eine vorgegebene Länge gebrachtes rollgeformtes Endlosprofil sein. Weiter kann der Tragarm ein auf eine vorgegebene Länge gebrachtes Strangpressprofil sein.

Der Tragarm kann mehrteilig sein. Vorzugsweise ist der Tragarm maximal zweiteilig. Insbesondere kann der Tragarm einteilig sein.

Die Sitzeinheit kann weitere Elemente aufweisen. Zum Beispiel kann die Sitzeinheit Mittel zur Befestigung des Tragarms aufweisen. Beispielsweise kann der Tragarm unter Verwendung der Mittel zur Befestigung des Tragarms an einem Fußboden und/oder an einer Seitenwand einer mobilen oder einer stationären Einheit befestigt werden. Die mobile bzw. die stationäre Einheit kann die zuvor genannte mobile bzw. stationäre Einheit sein.

Der Tragarm kann beispielsweise als Cantilever-Tragarm zur ausschließlichen Befestigung an einer Seitenwand einer mobilen Einheit ausgebildet sein. In diesem Fall kann das Mittel zur Befestigung des Tragarms ein Mittel zur ausschließlichen Befestigung des Tragarms an der Seitenwand der mobilen Einheit sein. Die mobile Einheit kann die zuvor genannte mobile Einheit sein.

Ferner ist die Erfindung gerichtet auf eine mobile Einheit mit der erfindungsgemäßen Sitzeinheit und/oder eine seiner Weiterbildungen.

Die mobile Einheit kann ein Fahrzeug oder ein Teil eines Fahrzeugs sein. Beispielsweise kann die mobile Einheit ein Bus, ein Schienenfahrzeug, ein Flugzeug oder ein Schiff sein. Weiter kann die mobile Einheit beispielsweise ein Wagon eines Schienenfahrzeugs sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit der erfindungsgemäßen Sitzeinheit und der erfindungsgemäßen mobilen Einheit kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine dreidimensionale Ansicht einer Sitzeinheit,
- FIG 2: eine Seitenansicht der Sitzeinheit aus FIG 1,
- FIG 3: eine Draufsicht der Sitzeinheit aus FIG 1 und FIG 2,
- FIG 4: eine Frontansicht der Sitzeinheit aus den Figuren 1 bis 3,
- FIG 5: eine dreidimensionale Ansicht einer anderen Sitzeinheit und
- FIG 6: eine Frontansicht der Sitzeinheit aus FIG 5.

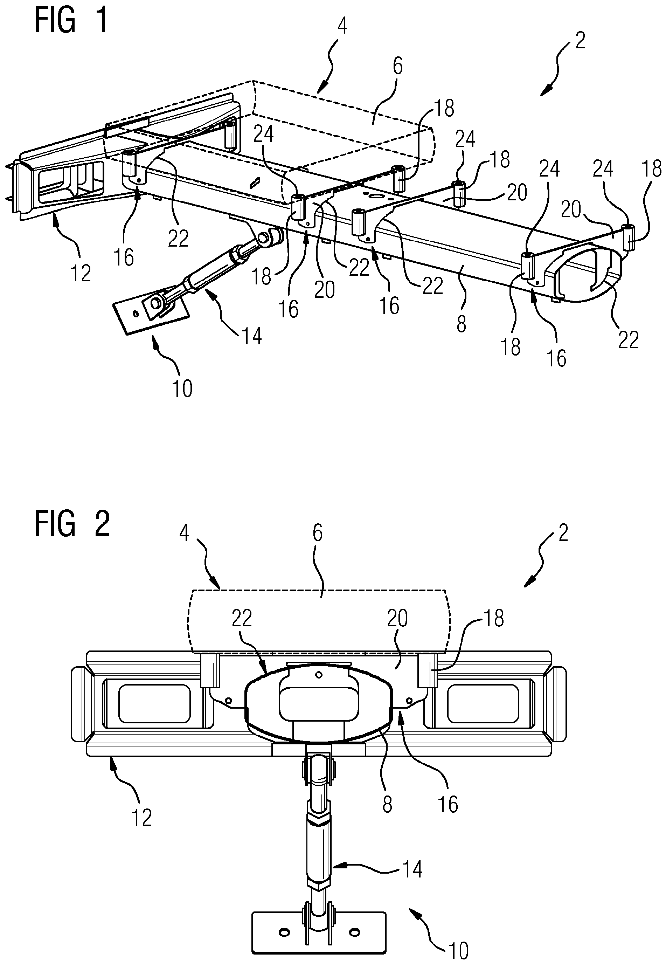

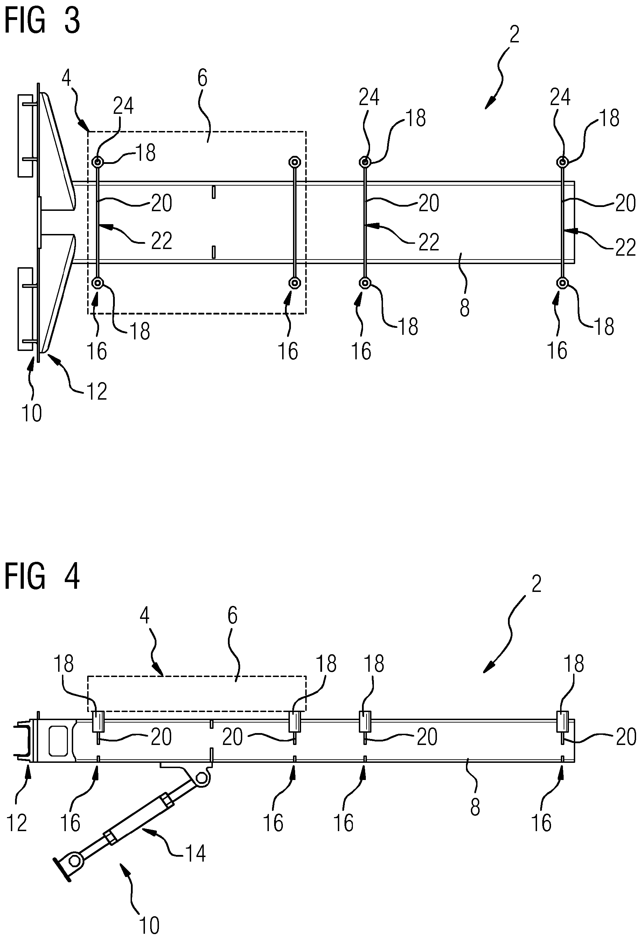

FIG 1 zeigt schematisch eine dreidimensionale Ansicht einer Sitzeinheit 2. In FIG 2 ist außerdem eine Seitenansicht, in FIG 3 eine Draufsicht und in FIG 4 eine Frontansicht dieser Sitzeinheit 2 gezeigt. Die Sitzeinheit kann beispielsweise eine Sitzeinheit für eine mobile Einheit sein, insbesondere für ein Schienenfahrzeug.

Die Sitzeinheit 2 weist einen Sitz 4 auf. Der Sitz 4 umfasst ein Sitzflächenelement 6. Außerdem kann der Sitz 4 noch weitere Elemente aufweisen, welche hier der Übersichtlichkeit halber nicht gezeigt sind. Der Sitz ist in den Figuren 1 bis 4 nur mittels gestrichelter Linien angedeutet, sodass die weiteren Elemente der Sitzeinheit 2 sichtbar sind.

Außerdem weist die Sitzeinheit einen Tragarm 8 auf. Der Tragarm 8 ist ein auf Länge gebrachtes Endlosprofil, insbesondere ein auf Länge gebrachtes rollgeformtes Endlosprofil. Ferner ist der Tragarm 8 einteilig. In diesem Ausführungsbeispiel ist der Tragarm 8 als Cantilever-Tragarm ausgebildet. Das heißt, dass der Tragarm zur ausschließlichen Befestigung an einer Seitenwand der mobilen Einheit ausgebildet ist.

Ferner umfasst die Sitzeinheit 2 ein Mittel 10 zur Befestigung des Tragarms 8 an der Seitenwand der mobilen Einheit. In diesem Beispiel umfasst das Mittel 10 zur Befestigung des Tragarms 8 eine Wandhalterung 12 und eine Stütze 14. Unter Verwendung des Mittels 10 zur Befestigung des Tragarms 8, kann der Tragarm 8 an einer Seitenwand der mobilen Einheit befestigt werden.

Der Sitz 4 ist unter Verwendung von Tragelementen 16 an dem Tragarm 8 befestigt. In diesem Beispiel ist der Sitz 4 unter Verwendung von zwei Tragelementen 16 an dem Tragarm 8 befestig. Die Sitzeinheit 2 umfasst diese zwei Tragelemente 16.

Jedes der Tragelemente 16 umfasst jeweils zumindest ein Sitzbefestigungselement 18, mittels welchem das jeweilige Tragelement 16 fest mit dem Sitz 4 verbunden ist. Die Tragelemente 16 sind derart angeordnet, dass die Sitzbefestigungselemente 18 außerhalb des Tragarms 8 angeordnet sind.

In diesem Ausführungsbeispiel umfasst jedes der Tragelemente 16 jeweils zwei Sitzbefestigungselemente 18. Jedes der Tragelemente 16 weist in seiner Längsrichtung zwei gegenüberliegende Enden auf. Die zwei Sitzbefestigungselemente 18 eines jeden Tragelements 16 sind jeweils an den gegenüberliegenden Enden des jeweiligen Tragelements 16 angeordnet.

Außerdem weist jedes der Tragelemente 16 in diesem Ausführungsbeispiel jeweils eine einsteckbare Rippe 20 auf. Jede der einsteckbaren Rippen 20 ist jeweils zumindest teilweise in den Tragarm 8 eingesteckt.

Der Tragarm 8 weist mehrere Aussparungen 22 auf. Die Aussparungen 22 sind schlitzförmig ausgeführt. Insbesondere verlaufen die Aussparungen 22 in Querrichtung des Tragarms 8. Jedes der Tragelemente 16 ist jeweils teilweise in jeweils zumindest einer der Aussparungen 22 eingesetzt. Insbesondere ist die einsteckbare Rippe 20 jeweils zumindest teilweise in jeweils zumindest eine der Aussparungen 22 eingesetzt, insbesondere eingesteckt.

Die Längsrichtung des jeweiligen Tragelements 16 verläuft jeweils im Wesentlichen parallel zu einer Querrichtung des Tragarms 8. Dabei stehen die Querrichtung des Tragarms 8 und die Längsrichtung des Tragarms 8 senkrecht zueinander. Weiter verläuft die Querrichtung im Wesentlichen horizontal.

Der Sitz 4 ist unter Verwendung der Tragelemente 16 unbeweglich relativ zu dem Tragarm 8. Das heißt, dass der Sitz 4 unter der Verwendung der Tragelemente 16 nicht relativ zu dem Tragarm 8 bewegt werden kann.

In diesem Ausführungsbeispiel umfasst jedes der Sitzbefestigungselemente 18 eine Gewindebohrung 24. Jedes der Sitzbefestigungselemente 18 ist jeweils über die jeweilige Gewindebohrung 24 jeweils unter Verwendung einer Schraubverbindung mit dem Sitz 4 verbunden. Außerdem ist jedes der Tragelemente 16 jeweils unter Verwendung einer Schweißverbindung mit dem Tragarm 8 verbunden. Insbesondere ist die jeweilige Rippe 20 jeweils unter Verbindung einer Schweißverbindung mit der jeweils zumindest einen Aussparung 22, in welche die jeweilige Rippe 20 eingesetzt ist, verbunden. Ferner ist jeweils eine Rippe 20 mit jeweils zwei Sitzbefestigungselementen 18 unter Verwendung einer Schweißverbindung verbunden.

In diesem Ausführungsbeispiel ist der Sitz 4 unter der Verwendung der Tragelemente 16 von dem Tragarm 8 beabstandet. Außerdem sind die Sitzbefestigungselemente 18 in diesem Ausführungsbeispiel von dem Tragarm 8 beabstandet. Insbesondere sind die Sitzbefestigungselemente 18 in Querrichtung des Tragarms 8 von dem Tragarm beabstandet (vgl. FIG 3).

In diesem Beispiel weist die Sitzeinheit 2 zwei weitere Tragelemente 16 auf. Ein weiterer Sitz (nicht gezeigt) könnte über die zwei weiteren Tragelemente 16 mit dem Tragarm 8 verbunden sein/werden.

Vorzugweise sind alle Tragelemente 16 der Sitzeinheit 2 vom Aufbau identisch zueinander, wie in diesem Ausführungsbeispiel gezeigt.

Die Tragelemente 16 können frei an dem Tragarm 8 positioniert werden, je nachdem wo die Aussparungen 22 eingebracht werden. Außerdem sind die Sitzbefestigungselemente 18 relativ zu dem Tragarm 8 frei positionierbar. Auf diese Weise kann der Sitz 4 ebenfalls frei positioniert werden. Außerdem kann auf diese Weise der Sitz 4 frei ausgewählt werden.

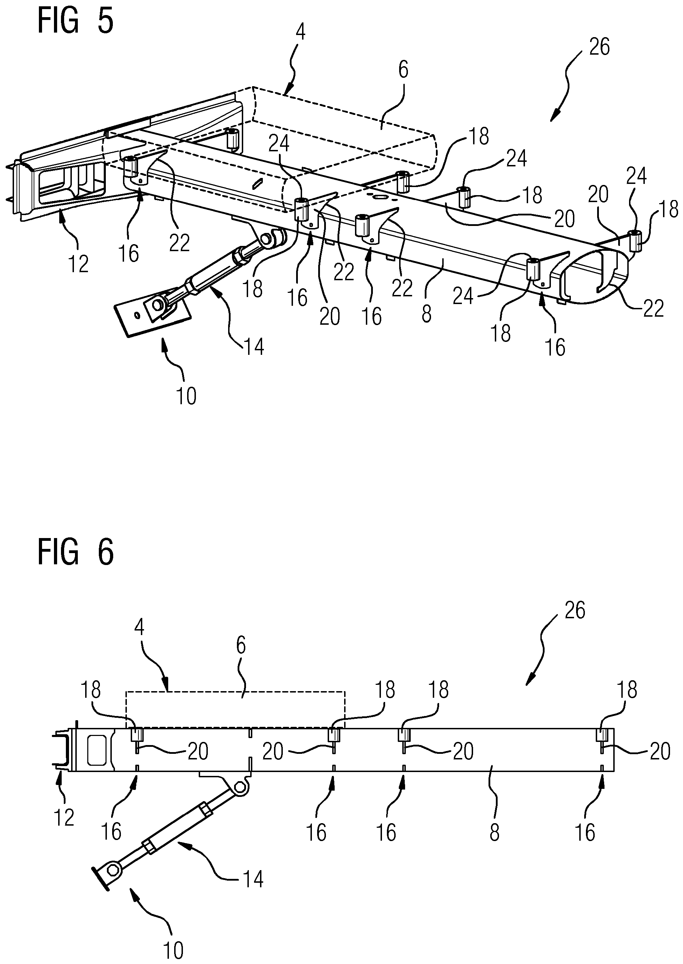

FIG 5 und FIG 6 zeigen eine andere Sitzeinheit 26. Insbesondere zeigt FIG 5 eine dreidimensionale Ansicht und FIG 6 eine Frontansicht der Sitzeinheit 26.

Die nachfolgende Beschreibung beschränkt sich im Wesentlichen auf die Unterschiede zum Ausführungsbeispiel aus den Figuren 1 bis 4, auf die bezüglich gleichbleibender Merkmale und Funktionen verwiesen wird. Im Wesentlichen gleichbleibende Elemente werden grundsätzlich mit dem gleichen Bezugszeichen bezeichnet und nicht erwähnte Merkmale sind in das folgende Ausführungsbeispiel übernommen, ohne dass sie erneut beschrieben sind.

Der Sitz 4 ist über vier Tragelemente 16 mit dem Tragarm 8 verbunden. Jedes der Tragelemente 16 umfasst eine Rippe 20 und ein einziges Sitzbefestigungselement 18. Außerdem ist das Tragelement 16 derart ausgebildet, dass der Sitz 4 teilweise auf einer Oberfläche des Tragarms 8 aufliegt.

Die Sitzeinheit 26 umfasst diese vier Tragelemente 16.

Außerdem umfasst die Sitzeinheit 26 weitere vier Tragelemente 16. Ein weiterer Sitz (nicht gezeigt) könnte unter Verwendung der vier weiteren Tragelemente 16 mit dem Tragarm 8 verbunden werden/sein.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten Schutzumfang der Erfindung zu verlassen.

## Patentansprüche

1. Sitzeinheit (2, 26) mit zumindest einem Sitz (4) und einem Tragarm (8),
wobei der Sitz (4) unter Verwendung von Tragelementen (16) an dem Tragarm (8) befestigt ist,
wobei jedes der Tragelemente (16) jeweils zumindest ein Sitzbefestigungselement (18) umfasst, mittels welchem das jeweilige Tragelement (16) fest mit dem Sitz (4) verbunden ist, und
wobei die Tragelemente (16) derart angeordnet sind, dass die Sitzbefestigungselemente (18) außerhalb des Tragarms (8) angeordnet sind,
**dadurch gekennzeichnet, dass**
der Tragarm (8) mehrere schlitzförmige Aussparungen (22) aufweist und
jedes der Tragelemente (16) jeweils teilweise in zumindest einer der Aussparungen (22) eingesetzt ist und
jedes der Tragelemente (16) jeweils eine einsteckbare Rippe (20) aufweist, welche jeweils zumindest in eine der Aussparungen (22) des Tragarms (8) eingesteckt ist.

2. Sitzeinheit (2, 26) nach Anspruch 1,
**dadurch gekennzeichnet, dass**
der Sitz (4) unter Verwendung der Tragelemente (16) relativ zu dem Tragarm (8) unbeweglich ist.

3. Sitzeinheit (2, 26) nach Anspruch 1 oder 2,
**dadurch gekennzeichnet, dass**
jedes der Sitzbefestigungselemente (18) jeweils unter Verwendung einer Schraubverbindung mit dem Sitz (4) verbunden ist.

4. Sitzeinheit (2, 26) nach einem der vorhergehenden Ansprüche,
**dadurch gekennzeichnet, dass**
jedes der Tragelemente (16) jeweils unter Verwendung einer Schweißverbindung mit dem Tragarm (8) verbunden ist.

5. Sitzeinheit (2) nach einem der vorhergehenden Ansprüche, **dadurch gekennzeichnet, dass**
jedes der Tragelemente (16) in seiner Längsrichtung zwei gegenüberliegende Enden aufweist und
jedes der Tragelemente (16) jeweils zwei Sitzbefestigungselemente (18) umfasst, welche jeweils an den gegenüberliegenden Enden des jeweiligen Tragelements (16) angeordnet sind.

6. Sitzeinheit (2) nach Anspruch 5,
**dadurch gekennzeichnet, dass**
die Längsrichtung des jeweiligen Tragelements (16) jeweils im Wesentlichen parallel zu einer Querrichtung des Tragarms (8) verläuft.

7. Sitzeinheit (2, 26) nach einem der vorhergehenden Ansprüche,
**dadurch gekennzeichnet, dass**
jedes der Tragelemente (16) jeweils eine Verbindungsfläche aufweist, deren jeweilige Form an die Form einer Oberfläche des Tragarms (8) angepasst ist, und
jede der Verbindungsflächen mit der Oberfläche des Tragarms (8) fest verbunden ist.

8. Sitzeinheit (2) nach einem der vorhergehenden Ansprüche, **dadurch gekennzeichnet, dass**
der Sitz (4) unter Verwendung der Tragelemente (16) von dem Tragarm (8) beabstandet ist.

9. Sitzeinheit (2, 26) nach einem der vorhergehenden Ansprüche,
**dadurch gekennzeichnet, dass**
der Tragarm (8) ein auf eine vorgegebene Länge gebrachtes Endlosprofil ist, insbesondere ein auf eine vorgegebene Länge gebrachtes rollgeformtes Endlosprofil oder ein auf eine vorgegebene Länge gebrachtes Strangpressprofil.

10. Sitzeinheit (2, 26) nach einem der vorhergehenden Ansprüche,
**dadurch gekennzeichnet, dass**
der Tragarm (8) maximal zweiteilig ist,
insbesondere dass der Tragarm (8) einteilig ist.

11. Sitzeinheit (2, 26) nach einem der vorhergehenden Ansprüche,
**dadurch gekennzeichnet, dass**
der Tragarm (8) als Cantilever-Tragarm zur ausschließlichen Befestigung an einer Seitenwand einer mobilen Einheit ausgebildet ist.

12. Mobile Einheit mit der Sitzeinheit (2, 26) nach einem der vorhergehenden Ansprüche.

## Claims

1. Seat unit (2, 26) having at least one seat (4) and a supporting arm (8),
wherein the seat (4) is fixed on the supporting arm (8) using supporting elements (16),
wherein each of the supporting elements (16) in each case comprises at least one seat-fixing element (18), by means of which the respective supporting element (16) is securely connected to the seat (4),
and
wherein the supporting elements (16) are arranged in such a manner that the seat-fixing elements (18) are arranged outside the supporting arm (8),
**characterized in that** the supporting arm (8) has a plurality of slot-shaped recesses (22), and
each of the supporting elements (16) is in each case partially inserted in at least one of the recesses (22), and
each of the supporting elements (16) in each case has a rib (20) which can be plugged in and which is in each case plugged at least into one of the recesses (22) of the supporting arm (8).

2. Seat unit (2, 26) according to Claim 1,
**characterized in that**
the seat (4) using the supporting elements (16) is immovable relative to the supporting arm (8).

3. Seat unit (2, 26) according to Claim 1 or 2, **characterized in that**
each of the seat-fixing elements (18) is in each case connected to the seat (4) using a screw connection.

4. Seat unit (2, 26) according to one of the preceding claims, **characterized in that**
each of the supporting elements (16) is in each case connected to the supporting arm (8) using a welded joint.

5. Seat unit (2) according to one of the preceding claims, **characterized in that**
each of the supporting elements (16) has two opposite ends in its longitudinal direction, and
each of the supporting elements (16) in each case comprises two seat-fixing elements (18) which are each arranged at the opposite ends of the respective supporting element (16) .

6. Seat unit (2) according to Claim 5,
**characterized in that**
the longitudinal direction of the respective supporting element (16) in each case runs substantially parallel to a transverse direction of the supporting arm (8).

7. Seat unit (2, 26) according to one of the preceding claims, **characterized in that**
each of the supporting elements (16) in each case has a connecting surface, the respective shape of which is adapted to the shape of a surface of the supporting arm (8), and
each of the connecting surfaces is securely connected to the surface of the supporting arm (8).

8. Seat unit (2) according to one of the preceding claims, **characterized in that**
the seat (4) is spaced apart from the supporting arm (8) using the supporting elements (16).

9. Seat unit (2, 26) according to one of the preceding claims, **characterized in that**
the supporting arm (8) is an endless profile brought to a predetermined length, in particular a roll-formed endless profile brought to a predetermined length, or an extruded profile brought to a predetermined length.

10. Seat unit (2, 26) according to one of the preceding claims, **characterized in that**
the supporting arm (8) is at maximum of two parts,
in particular **in that** the supporting arm (8) is of one part.

11. Seat unit (2, 26) according to one of the preceding claims, **characterized in that**
the supporting arm (8) is designed as a cantilever supporting arm for exclusively fixing to a side wall of a mobile unit.

12. Mobile unit having the seat unit (2, 26) according to one of the preceding claims.

## Revendications

1. Unité (2, 26) à siège comprenant au moins un siège (4) et une console (8),
dans laquelle le siège (4) est fixé à la console (8) en utilisant des éléments (16) porteurs ,
dans laquelle chacun des éléments (16) porteurs comprend respectivement au moins un élément (18) de fixation de siège, au moyen duquel l'élément (16) respectif porteur est relié fixement au siège (4),
et
dans laquelle les éléments (16) porteurs sont disposés de manière à ce que les éléments (18) de fixation de siège soient disposés à l'extérieur de la console (8),
**caractérisée en ce que**
la console (8) a plusieurs évidements (22) en forme de fentes et chacun des éléments (16) porteurs est inséré respectivement en partie dans au moins l'un des évidements (22) et
chacun des éléments (16) porteurs a respectivement une nervure (20) enfichable, qui est enfichée respectivement dans au moins l'un des évidements (22) de la console (8).

2. Unité (2, 26) à siège suivant la revendication 1, **caractérisée en ce que**
le siège (4) est, en utilisant les éléments (16) porteurs, immobile par rapport à la console (8).

3. Unité (2, 26) à siège suivant la revendication 1 ou 2, **caractérisée en ce que**
chacun des éléments (18) de fixation de siège est relié au siège (4) en utilisant respectivement un vissage.

4. Unité (2, 26) à siège suivant l'une des revendications précédentes,
**caractérisée en ce que**
chacun des éléments (16) porteurs est relié à la console (8) en utilisant respectivement un soudage.

5. Unité (2) à siège suivant l'une des revendications précédentes,
**caractérisée en ce que**
chacun des éléments (16) porteurs a, dans sa direction longitudinale, deux extrémités opposées et
chacun des éléments (16) porteurs comprend respectivement deux éléments (18) de fixation de siège, qui sont disposés respectivement aux extrémités opposées de l'élément (16) porteur respectif.

6. Unité (2) à siège suivant la revendication 5,
**caractérisée en ce que**
la direction longitudinale de l'élément (16) respectif porteur s'étend respectivement sensiblement parallèlement à une direction transversale de la console (8).

7. Unité (2, 26) à siège suivant l'une des revendications précédentes,
**caractérisée en ce que**
chacun des éléments (16) porteurs a respectivement une surface de liaison, dont la forme respective est adaptée à la forme d'une surface de la console (8), et
chacune des surfaces de liaison est reliée fixement à la surface de la console (8).

8. Unité (2) à siège suivant l'une des revendications précédentes,
**caractérisée en ce que**
le siège (4) est mis à distance de la console (8) en utilisant les éléments (16) porteurs.

9. Unité (2, 26) à siège suivant l'une des revendications précédentes,
**caractérisée en ce que**
la console (8) est un profilé sans fin mis à une longueur donnée à l'avance, notamment un profilé sans fin formé par profilage et mis à une longueur donnée à l'avance ou un profilé filé à la presse mis à une longueur donnée à l'avance.

10. Unité (2, 26) à siège suivant l'une des revendications précédentes,
**caractérisée en ce que**
la console (8) est au maximum en deux pièces,
la console (8) étant notamment d'une seule pièce.

11. Unité (2, 26) à siège suivant l'une des revendications précédentes,
**caractérisée en ce que**
la console (8) est constituée sous la forme d'une console en porte à faux pour être fixée exclusivement à une paroi latérale d'une unité mobile.

12. Unité mobile ayant l'unité (2, 26) à siège suivant l'une des revendications précédentes.
